# EUROPÄISCHE PATENTSCHRIFT

(11) **EP 0 610 691 B1**
(45) Veröffentlichungstag und Bekanntmachung des Hinweises auf die Patenterteilung: **29.05.1996**
(21) Anmeldenummer: 94100693.4
(22) Anmeldetag: 19.01.1994
(51) Int. Cl.: B60J 1/14

(54) **Ausstellbares Karosseriefenster für Kraftfahrzeuge**
Opening window of a vehicle body for motor vehicles
Fenêtre ouvrante de carrosserie pour véhicules à moteur

(30) Priorität: 12.02.1993 DE 4304209
(43) Veröffentlichungstag der Anmeldung: 17.08.1994
(73) Patentinhaber: HENNIGES ELASTOMER- UND KUNSTSTOFFTECHNIK GMBH & CO KG, D-31547 Rehburg-Loccum (DE); Bayerische Motoren Werke Aktiengesellschaft, 80788 München (DE)
(72) Erfinder: Kreye, Bernhard, D-31515 Wunstorf (DE); Mittelstädt, Gottfried, D-81545 München (DE)
(74) Vertreter: Wehser, Wulf, Dipl.-Ing.

(56) Entgegenhaltungen:
- EP-A- 0 096 129
- DE-A- 3 425 687
- DE-U- 8 709 446
- GB-A- 920 434
- PATENT ABSTRACTS OF JAPAN vol. 11, no. 196 (M-601) 24. Juni 1987 & JP-A-62 018 315 (NISAN MOTOR CO) 27. Januar 1987

## Beschreibung

Die Erfindung betrifft ein ausstellbares Karosseriefenster für Kraftfahrzeuge, bei welchem die auszustellende Scheibe bzw. das auszustellende Fenstger um eine in Fahrtrichtung vorn liegende im wesentlichen senkrechte Schwenkachase schwenkbar und in der jeweiligen ausgestellten Lage verriegelbar ist.

Bekannte Kraftfahrzeugfenster dieser Art haben eine Scheibe, die Isolierglas sein kann, die rahmenlos über Scharniere an dem Karosserieblech befestigbar ist. Nachteilig hierbei ist es, daß die Einbringung von Befestigungslöchern in die Scheibe in Verbindung mit dem Montageaufwand durch die auf der anderen Seite an der Karosserie anzubringenden Scharniere relativ groß ist, so daß derartige Ausstellfenster vergleichsweise kostengünstig sind.

Der Erfindung liegt demgemäß die Aufgabe zugrunde, ein Kraftfahrzeugfenster der eingangs genannten Art so auszubilden, daß das Fenster sich auf einfache Weise montieren läßt und sich insgesamt mit niedrigen Kosten herstellen läßt.

Diese Aufgabe wird erfindungsgemäß dadurch gelöst, daß die Scheibe von im Abstand zueinander auf dem Scheibenumfang angeordneten aus Metall bestehenden Klammerelementen übergriffen wird, die zwei Schenkel aufweisen, die einander gegenüberliegend auf der Scheibenfläche aufliegen und die auf den Scheibenrand durch einen zwischen Klammerelement und Scheibe angeordneten Kleber festgehalten sind, wobei die Klammerelemente an ebenfalls im Abstand zueinander an der Karosserie befestigbaren Trägern angeordnet sind, die aus Blech bestehen und einen im Bereich der Scheibe liegenden abgewinkelten Abschnitt aufweisen, der die Außenfläche des einen oder des anderen Schenkels übergreift, und wobei die Gesamtanordnung von einem Rahmen umgeben ist, der aus PVC oder anderen Materialien, wie Elastomer oder dergleichen bestehen kann, und der durch Umspritzung auf den Rand der Scheibe aufgebracht wird.

Mit dieser Anordnung wird erreicht, daß sich das so gebildete Ausstellfenster um eine etwa senkrechte Schwenkachse um die wenigen erforderlichen Grad schwenken läßt, welche im Winkelbereich des in den Rahmen eingreifenden Trägerbleches liegt.

Demgemäß kann auch das Ausstellfenster um diese Schwenkachse geschwenkt werden, und zwar unabhängig davon, ob das Trägerblech nun auf der Fahrzeuginnenseite oder auf der Fahrzeugaußenseite an der Außenfläche der jeweiligen Schenkel des Klammerelementes angebracht ist.

Das Trägerblech weist zweckmäßigerweise einen im wesentlichen im rechten Winkel gebogenen Blechabschnitt auf, der nicht länger ist als die Klammerelemente, und dessen Winkel die etwa senkrechte Schwenkachse bildet, um die sich das fertige Aussteilfenster schwenken läßt.

Zur Herstellung des fertigen Ausstellfensters wird also zunächst auf die beiden Flächen der Scheibe in deren Randbereich ein Kleber auf Polyurethanbasis und gegebenenfalls nach einer Primerung aufgebracht, worauf abschnittsweise die Klammerelemente zusammenmit ihren Trägern auf die Scheibe aufgesteckt und mit dieser verklebt werden, und worauf die Gesamtanordnung zur Bildung eines Rahmens umspritzt wird.

Besonders zweckmäßig ist es, wenn das einzelne Klammerelement mit dem in seinem Außenbereich angeordneten Trägerabschnitt einstückig ausgebildet ist. In diesem Fall entfallen zusätzliche Verbindugnen zwischen den beiden Abschnitten des Trägerteiles und des Klammerelementes.

Zwar ist es möglich, in der beschriebenen Weise den fahrzeuginnenseitigen Schenkel des Klammerelementes mit einem Schenkel des Trägerelementes zu versehen bzw. zu verbinden, jedoch hat es sich als besonders zweckmäßig erwiesen, wenn der Winkelabschnitt des Trägerbleches den außen liegenden Schenkel des Klammerelementes übergreift, da auf diese Weise die sich bildende Schwenkachse nach außen verlegt wird, so daß in Fahrtrichtung vorn liegende Abschnitte des Rahmens mehr Platz für ihre Bewegungsfreiheit haben, selbst wenn die Schwenkachse zur Kraftfahrzeuginnenseite gedrückt würde. Außerdem ist bei nach innen gedrückter Schwenkachse die Flexibilität des zu biegenden Trägerelementes deutlich kleiner als bei außen liegender Schwenkachse.

Die beiden Schenkel des Klammerelementes können mit Durchbruchöffnungen versehen sein, durch welche während des Umspritzens das Rahmenmaterial bis zur Scheibe hindurchtreten kann, so daß es hierdurch zu einer sicheren Festlegung der Scheibe innerhalb des Rahmens kommt.

Sofern im Rahmenbereich eines Schenkels der abgewinkelte Abschnitt des Trägerbleches und der Schenkel aufeinanderliegen, werden die Bohrungen oder Durchbrüche in beiden Teilen gleichzeitig in einem Arbeitsgang eingebracht.

Das Trägerblech besteht, wie oben beschrieben, im wesentlichen aus zwei rechtwinklig zueinander liegenden Abschnitten, wobei der kraftfahrzeuginnenseitig herausgeführte Abschnitt außerhalb des umspritzten Rahmens mit einem Haltewinkel oder dergleichen mit dem Karosserieblech verbunden sein kann. Die Verbindung kann lösbar durch eingedrehte Schrauben gestaltet sein.

Bei Karosseriekonstruktionen mit einer senkrechten Säule der Karosserie im Bereich eines Ausstellfensters, die aus Festigkeitsgründen einen relativ großen Querschnitt aufweist und an deren einer Seite der Rahmen des Ausstellfensters angeordnet werden soll, ist aufgrund der räumlichen Ausdehnung des Querschnittes der Säule wenig Platz für den umspritzten Rahmen. Dies macht insbesondere eine etwas geänderte Ausbildung der Befestigungsschraube und des Rahmens erforderlich.

Zum einen muß die Befestigungsschraube um 90° gegenüber den oben genannten Ausführungsformen in einer horizontalen Ebene gedreht eingebaut werden und zum anderen muß sie einen relativ flachen Kopf erhalten, um in den verbleibenden Raum überhaupt eintreten zu können.

Weitere Abänderungen sind hinsichtlich des Trägers des Klammerelementes erforderlich. Dieser kann nämlich nicht die in den vorangegangenen Ausführungsformen wiedergegebene Länge aufweisen, muß aber gleichwohl so gestaltet sein, daß eine Abwinklung durch entsprechende Materialverformung beim Öffnen des Fensters noch gegeben ist.

Zur Lösung dieser Aufgabe ist vorgesehen, daß der Träger dreimal abgewinkelt ist, und zwar einmal im rechten Winkel gegen den Uhrzeigersinn unmittelbar anschließend an das Klammerelement, zum zweiten Mal im Uhrzeigersinn um einen rechten Winkel in Richtung auf die Säule und zum dritten Mal im Uhrzeigersinn, so daß ein Trägerstück entsteht, das parallel zu demjenigen Trägerstück verläuft, das unmittelbar an das Klammerelement anschließt.

Auf diese Weise wird es möglich, einerseits den flachen Schraubenkopf in diesem Bereich zwischen den beiden einander gegenüberliegenden Trägerstücken anzuordnen, und andererseits noch einen Restraum zu gewinnen, in welchem das Umspritzungsmaterial des Rahmens, wenn auch mit geringerem Volumen, Platz findet.

Die Erfindung wird im folgenden anhand eines Ausführungsbeispieles in der Zeichnung näher erläutert.
- Fig. 1: zeigt im Schnitt eine Ausführungsform der Erfindung im Bereich der senkrechten Schwenkachse eines Ausstellfensters bei geöffnetem Fenster.
- Fig. 2: ist das Fenser nach Fig. 1 im geschlossenen Zustand.
- Fig. 3: zeigt im Schnitt eine abgewandelte Ausführungsform.

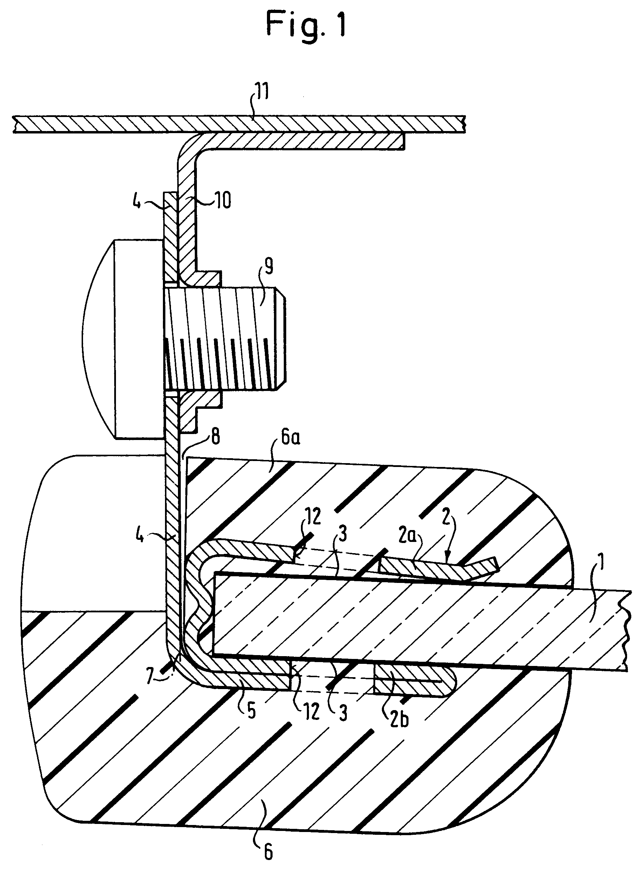

Gemäß Fig. 1 wird die Scheibe 1 des Ausstellfensters durch im Abstand zueinander angeordnete Klammerelemente 2 gehaltert, deren beide Schenkel 2a und 2b die SCheibe 1 umgreifen, wobei zwischen den Schenkeln 2a und 2b und der Scheibe 1 ein Kleber 3 aus PVC oder einem Elastomer oder dergleichen angebracht ist. Der Kleber ist schematisch angedeutet.

Wie aus Fig. 1 weiter hervorgeht, sind die Klammerelemente 2 an im Abstand zueinander an der Karosserie befestigbaren Trägern 4 angeordnet, wobei die Träger 4 aus Blech bestehen und einen im Bereich der Scheibe 1 liegenden abgewinkelten Abschnitt 5 aufweisen, der die Außenfläche des einen oder anderen Schenkels 2a bzw. 2b des Klammerelementes 2 übergreift.

Die aus dem abgewinkelten Abschnitt 5 und den Klammerlementen 2 bestehende Gesamtanordnung ist von einem Rahmen 6 umgeben, der aus PVC oder anderen Materialien, wie Elastomer oder dergleichen bestehen kann. Der Rahmen 6 ist durch Umspritzung auf die Scheibe 1 aufgebracht.

Da ein Ausstellfenster nur um wenige erforderliche Grad geschwenkt werden muß, die im Winkelbereich des in den Rahmen 6 eingreifenden Trägerbleches 4 liegen, und zwar dort, wo der abgewinkelte Abschnitt 5 an das etwa im rechten Winkel dazu liegende übrige Teil 4 des Trägerbleches anschließt, kann die etwa senkrecht liegende Schwenkachse 7 und die Beweglichkeit der Teile zueinander, wie in Fig. 1 dargestellt, dadurch gegeben sein, daß das Trägerblech 4, 5 im Bereich der Schwenkachse 7 verformt wird.

Der abgewinkelte Abschnitt 5 hat, wie aus Fig. 1 weiter hervorgeht, etwa dieselbe Länge wie die Schenkel des Klammerelementes 2, wobei, wie ebenfalls in Fig. 1 dargestellt, das Klammerelement 2 mit dem in seinem Außenbereich angeordneten Trägerabschnitt 5 einstückig ausgebildet sein kann.

Bei der in Fig. 1 wiedergegebenen Draufsicht ist das Ausstellfenster geöffnet, was durch den Spalt 8 zwischen dem Rahmenteil 6a und dem Trägerblech 4 angedeutet ist.

Das Trägerblech 4 kann im übrigen mittels einer Schraube 9 mit einem Haltewinkel 10 verbunden sein, der seinerseits in der Draufsicht gemäß Fig. 1 mit einem seiner beiden Schenkel mit der Karosserie 11 durch Kleben, Schweißen oder dergleichen verbunden ist.

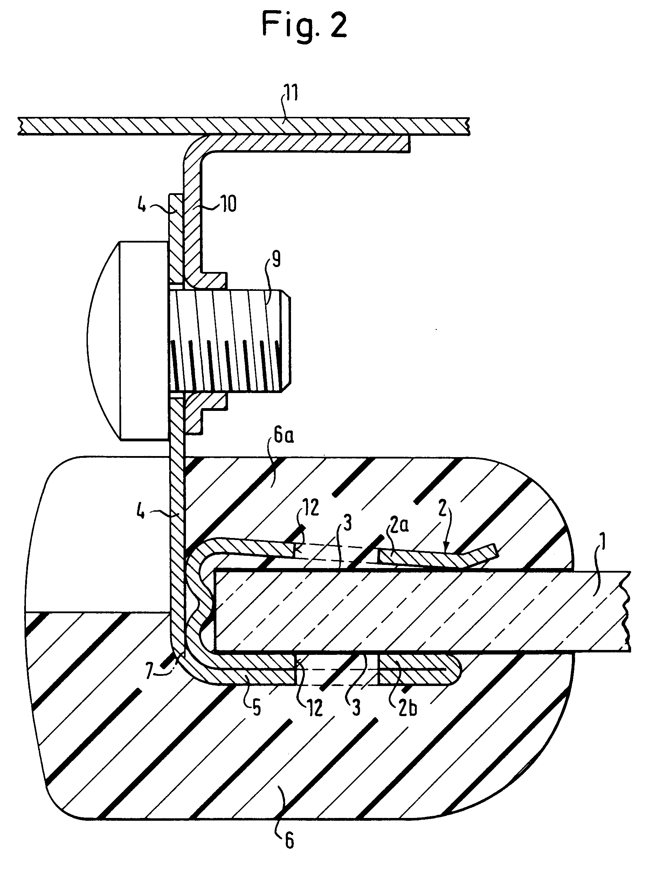

Fig. 2 ist dieselbe Draufsicht wie Fig. 1, jedoch im geschlossenen Zustand des Fesnters, was sich aus der Anlage des Rahmenabschnittes 6 a an dem Trägerblech 4 ergibt. Die beiden Schenkel des Trägerbleches 4 werden also gegeneinander um die in den Figuren 1 und 2 etwa senkrecht liegende Schwenkachse 7 abgewinkelt. In diesen Winkelbereich wird das Trägerblech 4 entsprechend verformt.

Wie aus den Figuren 1 und 2 weiter hervorgeht, können die Schenkel 2a und 2b sowie der abgewinkelte Abschnitt 5 des Trägerbleches 4 mit Durchbrüchen 12 versehen sein, die ,wenn zwei dieser Teile aufeinanderliegen (wie hier der außen liegende Schenkel 2b und der Abschnitt 5), in einem Arbeitsgang angebracht werden können.

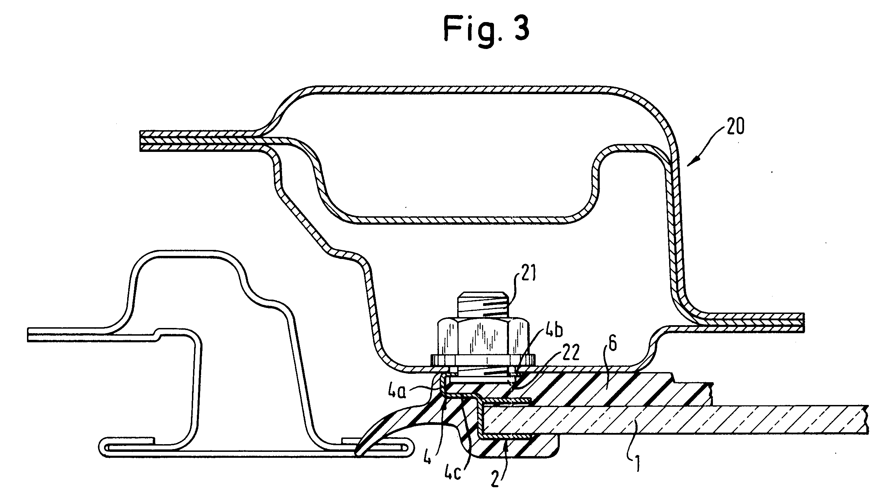

Fig. 3 zeigt eine Spezialkonstruktion, bei welcher eine senkrechte Säule 20 der Karosserie vorgesehen ist, die aus Festigkeitsgründen einen relativ großen Querschnitt aufweist, und an der an einer Seite der Rahmen 6 des Karosseriefensters 1 angeordnet werden soll. Aufgrund der räumlichen Ausdehnung des Querschnittes der senkrechten Säule 20 verbleibt aber relativ wenig Platz für den umspritzen Rahmen 6, so daß eine Befestigung, wie sie in den Figuren 1 und 2 wiedergegeben ist, nicht möglich wird. Es muß vielmehr die Befestigungsschraube 21 um 90° gedreht eingebaut werden, und sie muß einen relativ flachen Kopf 22 erhalten, um in den verbleibenden Raum hineinzupassen.

Aus demselben Grunde kann der abgewinkelte Abschnitt 5 des Trägers 4 des Klammerelementes 2 nicht die in der vorangegangenen Ausführungsform wiedergegebene Länge aufweisen. Gleichwohl muß er so gestaltet sein, daß eine Abwinklung durch entsprechende Materialverformung beim Öffnen des Fensters noch gegeben ist.

Hierzu ist vorgesehen, daß der Träger 4 dreimal abgewinkelt ist, und zwar einmal im rechten Winkel gegen den Uhrzeigersinn unmittelbar anschließend an das Klammerlement 2, zum zweiten Mall im Uhrzeigersinn um einen rechten Winkel in Richtung auf die Säule, so daß dieses Trägerstück 4a parallel zu der ursprünglichen Erstreckung des Trägers 4 verläuft, und zum dritten Mal im Uhrzeigersinn, so daß ein Trägerstück 4a entsteht, das parallel zum Trägerstück 4 c verläuft. Hierbei hat jedoch das Trägerstück 4c nur eine relativ kurze Länge, die es aber ermöglicht, einerseits den flachen Schraubenkopf 22 in diesem Bereich anzuordnen und andererseits noch einen Restraum zu gewinnen, in welchem das Umspritzungsmaterial des Rahmens 6 - wenn auch mit geringerem Volumen - Platz findet.

Das Trägerstück 4 b untergreift den flachen Kopf 22 der durch einen Durchbruch geführten Schraube 21, so daß es damit möglich ist, das Ende des Trägerstückes 4b mit der Schraube festzuspannen.

## Patentansprüche

1. Ausstellbares Karosseriefenster für Kraftfahrzeuge, bei welchem die auszustellende Scheibe bzw. das auszustellende Fenster um eine in Fahrtrichtung vorn liegende im wesentlichen senkrechte Schwenkachse schwenkbar und in der jeweiligen ausgestellten Lage verriegelbar ist, dadurch gekennzeichnet, daß die Scheibe (1) von im Abstand zueinander auf dem Scheibenumfang angeordneten aus Metall bestehenden Klammerelementen (2) übergriffen wird, die zwei Schenkel (2a, 2b) aufweisen, die einander gegenüberliegend auf der Scheibenfläche aufliegen und die auf den Scheibenrand durch einen zwischen Klammerelement (2) und Scheibe (1) angeordneten Kleber fetgehalten sind, wobei die Klammerelemente (2) an ebenfalls im Abstand zueinander an der Karosserie befestigbaren Trägern (4, 5) angeordnet sind, die aus Blech bestehen und einen im Bereich der Scheibe (1) liegenden abgewinkelten Abschnitt (5) aufweisen, der die Außenfläche des einen oder des anderen Schenkels (2a, 2b) übergreift, und wobei die Gesamtanordnung von einem Rahmen (6) umgeben ist, der aus PVC oder anderen Materialien, wie Elastomer oder dergleichen bestehen kann, und der durch Umspritzung auf den Rand der Scheibe (1) aufgebracht wird.

2. Ausstellfenster nach Anspruch 1, dadurch gekennzeichnet, daß das Trägerblech (4) einen im wesentlichen im rechten Winkel gebogenen Blechabschnitt (5) aufweist, der nicht länger ist als die Klammerelemente (2), und dessen Winkel die etwa in den Figuren 1 und 2 senkrecht zur Zeichenebene liegende Schwenkachse (7) bildet, um die sich das fertige Ausstellfenster schwenken läßt.

3. Verfahren zur Herstellung eines Ausstellfensters nach Anspruch 1 oder 2, dadurch gekennzeichnet, daß zunächst auf die beiden Flächen der Scheibe (1) in deren Randbereich ein Kleber (3) auf Polyurethanbasis und gegebenenfalls nach einer Primerung aufgebracht wird, worauf abschnittsweise die Klammerelemente (2) zusammen mit ihren Trägern (4, 5) auf die Scheibe (1) aufgesteckt und mit dieser verklebt werden, und worauf die Gesamtanordnung zur Bildung eines Rahmens (6) umgespritzt wird.

4. Ausstellfenster nach Anspruch 1 oder 2, dadurch gekennzeichnet, daß das einzelne Klammerelement (4) mit dem in seinem Außenbereich angeordneten Trägerabschnitt (5) einstückig ausgebildet ist.

5. Ausstellfenster nach einem der Ansprüche 1, 2 und 4, dadurch gekennzeichnet, daß der Winkelabschnitt (5) des Trägerbleches (4) den jeweils außen liegenden Schenkel (2b) des Klammerelementes (2) übergreift.

6. Ausstellfenstger nach einem der Ansprüche 1, 2 und 4 und 5, dadurch gekennzeichnet, daß die beiden Schenkel (2a, 2b) des Klammerelementes (2) mit Durchbruchsöffnungen (12) versehen sind, durch welche während des Umspritzens das Rahmenmaterial bis zur Scheibe (1) hindurchtreten kann, so daß es hierdurch zu einer sicheren Festlegung der Scheibe (1) innerhalb des Rahmens (6) kommt.

7. Ausstellfenster nach Anspruch 6, dadurch gekennzeichnet, daß bei einem Aufeinanderliegen eines Schenkels (2b) des Klammerelementes und des abgewinkelten Abschnittes (5) des Trägerbleches (4) die Bohrungen oder Durchbrüche (12) in beiden Teilen gleichzeitig in einem Arbeitsgang eingebracht werden.

8. Ausstellfenster nach einem der Ansprüche 1, 2 und 4 bis 7, dadurch gekennzeichnet, daß das Trägerblech (4) aus zwei rechtwinklig zueinander liegenden Abschnitten (4, 5) besteht, wobei der kraftfahrzeuginnenseitig herausgeführte Abschnitt (4) außerhalb des umspritzten Rahmens (6) mit einem Haltewinkel (10) oder dergleichen mit dem Karosserieblech (11) verbunden ist.

9. Ausstellfenster nach Anspruch 8, dadurch gekennzeichnet, daß die Verbindung mit dem Karosserieblech (1) lösbar durch eingedrehte Schrauben (9) gestaltet ist.

10. Ausstellfenster nach einem der Ansprüche 1 bis 7 und 9 bei einer Karosserie mit einer senkrechten Säule größeren Querschnittes im Fensterbereich, in welcher der Rahmen des Karosseriefensters angeordnet ist, dadurch gekennzeichnet, daß die Befestigungsschraube (21) um 90° gedreht eingebaut ist, so daß ihre Achse auf den Querschnittsmittelpunkt der Säule ( 20) hinweist und daß die Befestigungsschraube (21) im Bereich des Rahmens (6) einen relativ flachen Kopf (22) hat.

11. Ausstellfenster nach Anspruch 10, dadurch gekennzeichnet, daß der Träger (4) dreimal abgewinkelt ist, und zwar einmal im rechten Winkel gegen den Uhrzeigersinn unmittelhbar anschließend an das Klammerelement (2), zum zweiten Mal im Uhrzeigersinn um einen rechten Winkel in Richtung auf die Säule (2) und zum dritten Mal im Uhrzeigersinn, so daß ein Trägerstück (4a) entsteht, welches paralell zum unmittelbar an das Klammerelement (2) anschließenden Trägerstück (4c) verläuft.

## Claims

1. Openable bodywork window for motor vehicles, in which the window to be opened can be pivoted about an essentially vertical pivot axis, located at the front in the direction of travel, and can be locked in the respective opened position, characterized in that the window (1) is gripped by metal clamp elements (2) which are arranged at a distance apart from one another on the window periphery and exhibit two legs (2a, 2b) which bear on the window surface such that they are located opposite one another and which are fixed on the window border by an adhesive arranged between clamp element (2) and window (1), the clamp elements (2) being arranged on supports (4, 5) which can be fastened, likewise at a distance apart from one another, on the bodywork, consist of sheet metal and exhibit an angle section (5) which is located in the region of the window (1) and grips over the outer surface of one or the other leg (2a, 2b), and the entire arrangement being enclosed by a frame (6), which may consist of PVC or other materials, such as elastomers or the like, and is applied on the border of the window (1) by encapsulation.

2. Openable window according to Claim 1, characterized in that the metal support plate (4) exhibits a metal-plate section (5) which is bent essentially at right angles, which is not longer than the clamp elements (2), and the angle of which forms the pivot axis (7), which is located perpendicularly with respect to the drawing plane in Figures 1 and 2, for example, and about which the finished openable window can be pivoted.

3. Method of producing an openable window according to Claim 1 or 2, characterized in that, first of all, there is applied on the two surfaces of the window (1), in the border region thereof, a polyurethane-based adhesive (3), if appropriate after priming has been carried out, whereupon, in sections, the clamp elements (2) are fitted on to the window (1) together with their supports (4, 5) and are adhesively bonded to said window, and whereupon the entire arrangement is encapsulated for the formation of a frame (6).

4. Openable window according to Claim 1 or 2, characterized in that the individual clamp element (4) [sic] is formed in one piece with the support section (5) arranged in its outer region.

5. Openable window according to one Claims 1, 2 and 4, characterized in that the angle section (5) of the metal support plate (4) grips over the respectively outer leg (2b) of the clamp element (2).

6. Openable window according to one of Claims 1, 2 and 4 and 5, characterized in that the two legs (2a, 2b) of the clamp element (2) are provided with through-passage openings (12) through which the frame material can pass as far as the window (1) during the encapsulation process, this resulting in secure fixing of the window (1) within the frame (6).

7. Openable window according to Claim 6, characterized in that, if a leg (2b) of the clamp element and of the angle section (5) of the metal support plate (4) lie one upon the other, the bores or through-passages (12) can be made in the two parts simultaneously in one operation.

8. Openable window according to one of Claims 1, 2 and 4 to 7, characterized in that the metal support plate (4) comprises two sections (4, 5) located at right angles with respect to one another, the section (4), which is led out from within the motor vehicle, being connected to the bodywork plate (11) outside the encapsulating frame (6) by means of a retaining angle (10) or the like.

9. Openable window according to Claim 8, characterized in that connection to the bodywork plate (1) [sic] is carried out releasably by screwed-in screws (9).

10. Openable window according to one of Claims 1 to 7, and 9, in a bodywork with a vertical pillar of relatively large cross-section in the window region, in which pillar the frame of the bodywork window is arranged, characterized in that the fastening screw (21) is installed in a position rotated through 90°, with the result that its axis is oriented towards the cross-section centre point of the pillar (20), and that the fastening screw (21) has a relatively flat head (22) in the region of the frame (6).

11. Openable window according to Claim 10, characterized in that the support (4) is angled three times, to be precise firstly at right angles in the anticlockwise direction immediately adjoining the clamp element (2), secondly in the clockwise direction at right angles in the direction of the pillar (2), and thirdly in the clockwise direction, this resulting in a support piece (4a) which runs parallel to the support piece (4c) which immediately adjoins the clamp element (2).

## Revendications

1. Fenêtre de carrosserie orientable pour véhicule automobile, dans laquelle la vitre à orienter ou la fenêtre à orienter peut pivoter autour d'un axe de pivotement, sensiblement vertical, situé à l'avant dans le sens de la marche et peut être verrouillée dans la position ouverte, caractérisée en ce que sur la vitre (1) passent des éléments à agrafe (2) en métal espacés les uns des autres sur le pourtour de la vitre, lesquels présentent deux branches (2a, 2b) qui reposent l'une en face de l'autre sur la surface de la vitre et sont fixés sur le bord de la vitre par une colle placée entre l'élément à agrafe (2) et la vitre (1), les éléments à agrafe (2) étant placés sur des supports (4, 5) à fixer également espacés les uns des autres sur la carrosserie, qui sont en tôle et qui présentent une portion (5) coudée, située dans la région de la vitre (1), laquelle portion passe sur la surface extérieure de l'une ou de l'autre branche (2a, 2b), et l'ensemble étant entouré par un cadre (6) qui peut être en PVC ou en d'autres matériaux, tels qu'en élastomère ou similaire, et qui est appliqué sur le bord de la vitre (1) par injection.

2. Fenêtre orientable selon la revendication 1, caractérisée en ce que la tôle de support (4) présente une portion de tôle (5) courbée sensiblement à angle droit, qui n'est pas plus longue que les éléments à agrafe (2) et dont l'angle forme l'axe de pivotement (7) perpendiculaire au plan du dessin sur les figures 1 et 2, autour duquel la fenêtre orientable finie peut pivoter.

3. Procédé de fabrication d'une fenêtre orientable selon la revendication 1 ou 2, caractérisé en ce qu'il est appliqué d'abord sur les deux surfaces de la vitre (1), dans sa zone de bordure, une colle (3) à base de polyuréthanne et éventuellement après application d'une couche de fond, après quoi, portion par portion, les éléments à agrafe (2) avec leurs supports (4, 5) sont appliqués sur la vitre (1) et collés avec celle-ci, et après quoi l'ensemble est recouvert par injection pour former un cadre (6).

4. Fenêtre orientable selon la revendication 1 ou 2, caractérisée en ce que l'élément à agrafe (4) individuel est formé d'une seule pièce avec la portion de support (5) placée dans sa zone extérieure.

5. Fenêtre orientable selon l'une des revendications 1, 2 et 4, caractérisée en ce que la portion d'angle (5) de la tôle de support (4) passe sur la branche (2b) située à l'extérieur de l'élément à agrafe (2).

6. Fenêtre orientable selon l'une des revendications 1, 2 et 4 et 5, caractérisée en ce que les deux branches (2a, 2b) de l'élément à agrafe (2) sont pourvues d'ajours (12), par lesquels pendant l'enrobage par injection, le matériau du cadre peut traverser jusqu'à la vitre (1), de sorte qu'il en résulte une fixation sûre de la vitre (1) à l'intérieur du cadre (6).

7. Fenêtre orientable selon la revendication 6, caractérisée en ce que dans le cas où une branche (2b) de l'élément à agrafe et la portion coudée (5) de la tôle de support (4) sont superposées, les perçages ou ajours (12) sont pratiqués dans les deux pièces, simultanément, en une opération.

8. Fenêtre pivotante selon l'une des revendications 1, 2 et 4 à 7, caractérisée en ce que la tôle de support (4) est constituée de deux portions (4, 5) à angle droit l'une par rapport à l'autre, la portion (4) ressortant sur le côté intérieur du véhicule étant reliée, à l'extérieur du cadre (6) injecté, avec la tôle (11) de la carrosserie par une cornière de maintien (10) ou similaire.

9. Fenêtre orientable selon la revendication 8, caractérisée en ce que la liaison avec la tôle de carrosserie (1) est amovible par des vis (9) placées à l'intérieur.

10. Fenêtre orientable selon l'une des revendications 1 à 7 et 9 dans une carrosserie avec un montant vertical de grande section transversale dans la zone de la fenêtre, dans lequel est placé le cadre de la fenêtre de carrosserie, caractérisée en ce que la vis de fixation (21) est montée tournée de 90°, de sorte que son axe est dirigé vers le centre de la section transversale du montant (20) et en ce que la vis de fixation (21) possède une tête (22) relativement plate dans la zone du cadre (6).

11. Fenêtre orientable selon la revendication 10, caractérisée en ce que le support (4) est coudé trois fois, à savoir une fois à angle droit dans le sens inverse des aiguilles d'une montre> directement à la suite de l'élément à agrafe (2), une deuxième fois dans le sens des aiguilles d'une montre d'un angle droit en direction du montant (2) et une troisième fois dans le sens des aiguilles d'une montre, de sorte qu'il en résulte une pièce de support (4a) qui est parallèle à la pièce de support (4c) se rattachant directement à l'élément à agrafe (2).
